# FASCICULE DE BREVET EUROPEEN

(11) **EP 3 476 108 B1**
(45) Date de publication et mention de la délivrance du brevet: **09.02.2022**
(21) Numéro de dépôt: 17737325.5
(22) Date de dépôt: 16.06.2017
(51) Int. Cl.: H04L 29/12, H04L 12/24

(54) **PROCÉDÉ, PROGRAMME D'ORDINATEUR ET DISPOSITIF DE FOURNITURE D'UNE ADRESSE PAR UN DISPOSITIF À GÉRER D'UN RÉSEAU**
VERFAHREN, COMPUTER PROGRAMM UND VORRICHTUNG ZUM BEREITSTELLEN EINER ADRESSE DURCH EINE ZU VERWALTENDE VORRICHTUNG EINES NETZWERKS
METHOD, COMPUTER PROGRAM AND DEVICE FOR PROVIDING AN ADDRESS BY A DEVICE TO BE MANAGED OF A NETWORK

(30) Priorité: 22.06.2016 FR 1655808
(43) Date de publication de la demande: 01.05.2019
(73) Titulaire: ORANGE, 92130 Issy-les-Moulineaux (FR)
(72) Inventeur: OTT, Jean-Didier, 38920 CROLLES (FR); CLOAREC, Jean-Yves, 22300 LANNION (FR); BASSET, Régine, 38920 CROLLES (FR)
(74) Mandataire: Cabinet Beau de Loménie
(86) Numéro de dépôt international: PCT/FR2017/051571
(87) Numéro de publication internationale: WO 2017/220894

(56) Documents cités:
- US-A1- 2014 006 584
- DSL-HOME-TECHNICAL WORKING GROUP: "DSL Forum TR-111; Applying TR-069 to remote management of home networking devices", INTERNET CITATION, décembre 2005 (2005-12), XP002455794, Extrait de l'Internet: URL:http://www.dslforum.org/techwork/tr/TR -111.pdf [extrait le 2007-10-17]
- WING D ET AL: "Port Control Protocol (PCP); rfc6887.txt", PORT CONTROL PROTOCOL (PCP); RFC6887.TXT, INTERNET ENGINEERING TASK FORCE, IETF; STANDARD, INTERNET SOCIETY (ISOC) 4, RUE DES FALAISES CH- 1205 GENEVA, SWITZERLAND, 30 avril 2013 (2013-04-30), pages 1-88, XP015090359,

## Description

Procédé, programme d'ordinateur et dispositif de fourniture d'une adresse par un dispositif à gérer d'un réseau

### Arrière-plan de l'invention

L'invention se rapporte au domaine général des télécommunications.

Elle concerne plus particulièrement la gestion d'équipements à distance, par exemple par un fournisseur de services.

Dans le cadre de leurs offres de services, les fournisseurs de services tels que les opérateurs de télécommunications sont amenés à équiper leurs clients avec des équipements spécifiques adaptés aux services requis par ces derniers. De tels équipements ou CPE (pour Customer Premises Equipment) sont par exemple des boîtiers décodeurs numériques, aussi plus connus sous le nom de Set Top Box en anglais qui permettent aux clients d'accéder via leurs terminaux à des services de télévision et vidéo à la demande, des terminaux de visiophonie ou de voix sur IP (ou VoIP pour Voice Over IP) notamment, des passerelles d'accès au réseau Internet (aussi appelées passerelles résidentielles ou domestiques), etc. Ces équipements installés chez les clients sont généralement connectés à un réseau local (ex. réseau local domestique ou un réseau d'entreprise) relié au réseau de l'opérateur par l'intermédiaire d'un routeur domestique tel une passerelle résidentielle ou domestique.

Pour optimiser la qualité des services offerts à ses clients, un fournisseur de services assure généralement la gestion et la maintenance des divers équipements qu'il a placés chez eux. Cette gestion s'appuie notamment sur l'envoi de messages de mises à jour ou de configuration aux équipements, ainsi que la réception en provenance des équipements d'informations sur leur état.

Pour réaliser cette administration à distance, de nombreux fournisseurs de services utilisent le protocole standardisé CWMP (pour CPE WAN Management Protocol), aussi appelé TR-069 et publié par le Broadband Forum notamment à l'adresse https://www.broadbandforum.org/technical/download/TR-069_Amendment-5.pdf. Ce protocole offre en effet au fournisseur de services, via l'utilisation d'un serveur d'autoconfiguration (ou ACS pour Auto Configuration Server), un ensemble de services de gestion des équipements comprenant des services d'administration, de contrôle, de suivi des performances et de diagnostic, tout en répondant à des exigences de sécurité, d'extensibilité et d'indépendance vis-à-vis du fabricant des équipements.

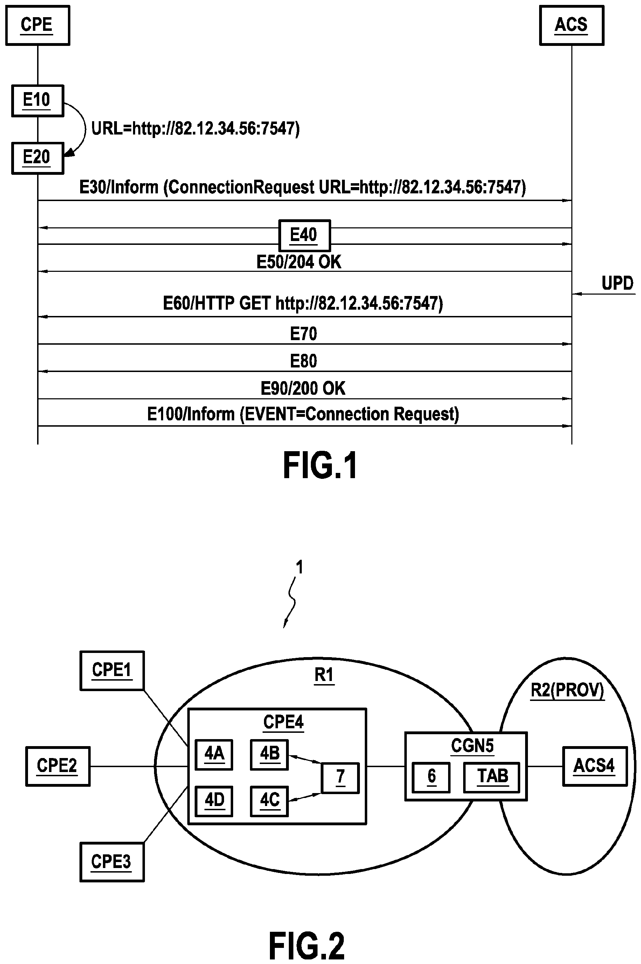

Le protocole CWMP est un protocole s'appuyant sur le protocole de transport IP (Internet Protocol), le protocole de transfert http (HyperText Transport Protocol) et sur le protocole SOAP (Simple Object Access Protocol). Les ordres sont émis entre un équipement et le serveur ACS chargé de sa gestion via le protocole http ou https (HTTP Secure) au cours de sessions. Ces sessions sont toujours initiées par l'équipement. Toutefois, un mécanisme dit de demande d'établissement d'une session ou « Connection Request » en anglais est prévu par le protocole pour permettre au serveur ACS de provoquer de manière asynchrone une session avec l'équipement pour assurer sa gestion. Les principales étapes de ce mécanisme sont rappelées brièvement à la **figure 1****.**

De manière générale, lors de chaque démarrage de l'équipement ou CPE (étape E10), celui-ci ouvre un serveur http sur une adresse ou URL (Uniform Resource Locator) (étape E20). Cette URL comprend l'adresse IP (Internet Protocol) de l'équipement (ex. 82.12.34.56) et le port (ex. 7547) sur lequel il peut être joint dans le réseau local auquel il appartient, notamment pour mettre en œuvre une procédure de « connection request ». L'URL considérée est par exemple http://82.12.34.56:7547.

Puis le CPE envoie un message CWMP Inform au serveur ACS auquel il est rattaché et qui assure sa gestion, autrement dit son administration (étape E30). Dans ce message, le CPE indique son modèle de données qui comprend notamment l'URL du serveur http ouvert à l'étape E20, sur laquelle le serveur ACS peut le contacter pour assurer sa gestion. On note qu'en cas de changement de cette URL, le CPE notifie le serveur ACS de sorte que le serveur ACS ait toujours à sa disposition une URL à jour.

Un dialogue s'ensuit entre le CPE et le serveur ACS dans la session ainsi établie (étape E40), qui se clôture par un message 204 OK envoyé par le serveur ACS au CPE (étape E50).

On suppose maintenant que le fournisseur de services souhaite effectuer une opération de mise à jour sur le CPE par l'intermédiaire du serveur ACS. Le mécanisme de « connection request » prévu par le protocole CWMP lui permettant cette opération consiste à émettre à destination du CPE une requête http GET sur l'URL fournie par le CPE (étape E60). De façon connue dans le protocole http, la méthode GET permet de demander une ressource.

S'ensuit en réponse à la requête du serveur ACS de manière optionnelle une authentification du serveur ACS par le CPE (étape E70) au cours de laquelle le serveur ACS fournit un identifiant et un mot de passe préalablement partagés entre le CPE et le serveur ACS (étape E80). Un message 200 OK est émis (étape E90) par le CPE à destination du serveur ACS lorsqu'il accepte la demande de Connection Request, le cas échéant en cas de succès de l'authentification.

Suite à cet échange et à l'authentification positive du serveur ACS, le CPE répond à la demande d'établissement d'une session de gestion du serveur ACS en tentant d'initier une session avec ce dernier, et envoie un message Inform au serveur ACS contenant un événement Event = ConnectionRequest (E100). Dès lors, le serveur ACS peut administrer à distance le CPE via la session ainsi établie et lui demander différentes actions par le biais de commandes RPC (Remote Procedure Call) en vue de sa mise à jour. Par exemple, il peut lui demander de modifier la configuration d'un ou de plusieurs paramètres, de retourner la valeur d'un de ses paramètres, etc.

Autrement dit, selon ce mécanisme de « connection request », le serveur ACS requiert une connexion du CPE en visitant une URL fournie par le CPE et après s'être authentifié le cas échéant auprès du CPE. Ce mécanisme suppose donc une joignabilité IP directe du CPE par le serveur ACS. Il n'est donc pas directement applicable lorsque le CPE est situé derrière une entité de traductions d'adresses aussi appelée NAT (Network Address Translation) ou derrière un système de protection de réseau tel qu'un pare-feu.

L'amendement 5 du protocole CWMP définit divers mécanismes dits de traversée de NAT permettant d'atteindre et de gérer des équipements CPE qui sont rattachés à un routeur domestique comprenant une entité NAT. Certains de ces mécanismes nécessitent la mise en place d'infrastructures idoines. C'est le cas par exemple du mécanisme de traversée de NAT décrit à l'annexe G du protocole CWMP et qui s'appuie sur les protocoles STUN (Simple Traversai of UDP through NATs) et UDP (User Datagram Protocol). Ce mécanisme prévoit le maintien d'une connexion ouverte avec un serveur STUN via l'envoi de messages périodiques à ce serveur, cette connexion étant alors utilisée par le serveur ACS pour administrer le CPE. Il nécessite la présence d'un client STUN au niveau de l'équipement et la présence d'un serveur STUN au niveau du serveur ACS de l'opérateur. Il en est de même du mécanisme de traversée de NAT décrit à l'annexe K du protocole CWMP s'appuyant sur le protocole XMPP (Extensible Messaging and Presence Protocol) et qui requiert le maintien d'une connexion ouverte avec un serveur XMPP.

L'appendice IV du protocole CWMP propose un autre mécanisme de traversée de NAT basé sur l'utilisation du protocole UPnP IGD (Internet Gateway Device) entre le CPE et le routeur domestique comprenant l'entité NAT. Ce mécanisme ne nécessite aucune infrastructure externe spécifique à proprement parler. Toutefois son application se limite à la gestion d'équipements CPE situés derrière le routeur domestique comprenant l'entité NAT et assurant l'accès au réseau de l'opérateur.

Le protocole UPnP IGD étant un protocole dédié aux équipements du réseau local domestique, ce mécanisme n'est pas utilisable lorsque le CPE dont l'opérateur souhaite assurer la gestion est le routeur domestique à proprement parler et qu'une entité NAT se trouve dans le réseau de l'opérateur. Une telle entité NAT est communément appelée « NAT opérateur » ou encore en anglais CGN pour Carrier Grade NAT ou LSN pour Large Scale NAT. Elle permet de distribuer aux terminaux des clients d'un opérateur, leur routeur (ou passerelle) domestique par exemple, des adresses IP privées ou internes au lieu d'adresses IP publiques ou externes, et à traduire ces adresses internes en adresses externes vers Internet. La traduction peut s'appuyer sur une traduction de ports de sorte à associer une seule adresse externe à de nombreux clients simultanément. De telles entités CGN ou LSN sont couramment utilisées par les opérateurs pour pallier la pénurie d'adresses IPv4, gérer la transition entre les systèmes d'adressage IPv4 et IPv6, ou encore par les opérateurs des réseaux mobiles.

Le document US 2014/006584 A1 (HE ZHIQIN [CN]) 2 janvier 2014 (2014-01-02), Fig. 2 et alinéas [0043]-[0056], Fig. 3 et alinéa [0053], Fig. 4 et alinéas [0061]-[0075], Fig. 5 et alinéas [0076]-[0104] décrit un procédé permettant d'administrer un terminal IPv4.

Le document DSL-HOME-TECHNICAL WORKING GROUP : « DSL Forum TR-111 ; Applying TR-069 to remote management of home networking devices », décembre 2005, pages 14-15, décrit une procédure basée sur le protocole STUN permettant à un dispositif de gestion d'initier une session de gestion avec un dispositif à gérer.

Il existe donc un besoin d'un mécanisme permettant d'administrer un routeur domestique, ou plus généralement un terminal client, situé derrière un dispositif intermédiaire tel qu'un NAT opérateur ou un système de protection de réseau situé dans un réseau d'opérateur.

### Objet et résumé de l'invention

La présente invention définit un procédé selon la revendication 1, un programme d'ordinateur selon la revendication 8 et un dispositif à gérer selon la revendication 10. D'autres modes de réalisation sont présentés dans les revendications dépendantes 2-7, 9 et 11.

L'invention répond à ce besoin en proposant un procédé de fourniture par un dispositif à gérer d'un premier réseau de télécommunications, à un dispositif de gestion du dispositif à gérer situé dans un deuxième réseau de télécommunications, d'une adresse permettant au dispositif de gestion de demander un établissement d'une session de gestion au dispositif à gérer, au moins un dispositif intermédiaire étant situé entre les premier et deuxième réseaux de télécommunications, ce procédé de fourniture comprenant des étapes mises en oeuvre par le dispositif à gérer, dont :
- une étape d'identification d'un serveur apte à contrôler le dispositif intermédiaire ;
- une étape d'envoi au serveur d'une requête d'établissement par le dispositif intermédiaire d'un routage statique vers le dispositif à gérer, permettant d'acheminer les paquets reçus par le dispositif intermédiaire à destination d'une adresse de joignabilité associée par le dispositif intermédiaire au dispositif à gérer vers une adresse de contact du dispositif à gérer ;
- une étape de réception d'une réponse du serveur comprenant ladite adresse de joignabilité associée par le dispositif intermédiaire au dispositif à gérer ; et
- une étape de fourniture au dispositif de gestion d'une adresse comprenant l'adresse de joignabilité reçue, ladite adresse étant destinée à être utilisée par le dispositif de gestion pour demander un établissement d'une session de gestion au dispositif à gérer.

Corrélativement, l'invention vise également un dispositif à gérer d'un premier réseau de télécommunications, géré par un dispositif de gestion situé dans un deuxième réseau de télécommunications, le dispositif à gérer comprenant :
- un module d'identification, configuré pour identifier un serveur apte à contrôler un dispositif intermédiaire situé entre les premier et deuxième réseaux de télécommunications ;
- un module d'envoi, configuré pour envoyer au serveur une requête d'établissement par le dispositif intermédiaire d'un routage statique vers le dispositif à gérer permettant d'acheminer les paquets reçus par le dispositif intermédiaire à destination d'une adresse de joignabilité associée par le dispositif intermédiaire au dispositif à gérer vers une adresse de contact dudit dispositif à gérer ;
- un module de réception, apte à recevoir une réponse du serveur comprenant l'adresse de joignabilité associée par le dispositif intermédiaire au dispositif à gérer ; et
- un module de fourniture configuré pour fournir au dispositif de gestion une adresse comprenant l'adresse de joignabilité reçue, ladite adresse étant destinée à être utilisée par le dispositif de gestion pour demander un établissement d'une session de gestion au dispositif à gérer.

Par adresse de joignabilité on entend une adresse permettant d'atteindre le dispositif à gérer, i.e. de le joindre. Cette adresse peut comprendre notamment une adresse IP (Internet Protocol) et un port alloués au dispositif à gérer ou seulement une adresse IP.

Le procédé de fourniture d'une adresse tire son origine d'un problème constaté pour la gestion d'un routeur domestique dans un premier réseau. Il est toutefois applicable à la gestion de tout dispositif du premier réseau dont le dispositif de gestion se trouve dans un deuxième réseau séparé du premier réseau par un dispositif intermédiaire.

A titre illustratif, le premier réseau est par exemple le réseau de l'opérateur en charge de la gestion du dispositif à gérer, et le dispositif intermédiaire un NAT opérateur ou un système de protection de réseau s'interfaçant entre les premier et deuxième réseaux de télécommunications. Le dispositif intermédiaire est ainsi en coupure de flux entre le dispositif à gérer et le dispositif de gestion. Le dispositif intermédiaire peut indifféremment se trouver dans le deuxième réseau ou dans un autre réseau situé entre le premier et le deuxième réseau.

L'invention propose donc un mécanisme très simple et facile à mettre en œuvre permettant à un opérateur (ou un fournisseur de services) d'administrer un dispositif situé derrière un NAT opérateur ou un système de protection de réseau localisés dans le réseau de l'opérateur. Ce mécanisme s'appuie sur la mise en place d'un échange entre le dispositif à gérer et un serveur apte à contrôler le dispositif intermédiaire afin d'établir un routage statique vers le dispositif à gérer. L'établissement de ce routage statique permet au dispositif à gérer d'obtenir une adresse de joignabilité accessible par les équipements placés en amont du dispositif intermédiaire (par rapport aux messages « entrants » c'est-à-dire destinés au dispositif à gérer). Autrement dit, grâce à l'adresse de joignabilité affectée au dispositif à gérer par le dispositif intermédiaire lors de l'établissement du routage statique, le dispositif à gérer devient joignable depuis le deuxième réseau même en présence d'un NAT opérateur et/ou d'un système de protection de réseau dans ce réseau. Le dispositif à gérer est donc *a fortiori* joignable sur cette adresse par son dispositif de gestion (i.e. par son dispositif ACS dans le cas du protocole CWMP). La communication de cette adresse de joignabilité par le dispositif à gérer à son dispositif de gestion, par exemple dans le contexte d'application du protocole CWMP comme URL de « Connection Request » en remplacement de son adresse de contact (interne ou privée dans le premier réseau), permet au dispositif de gestion de déclencher ultérieurement un établissement d'une session de gestion par le dispositif à gérer via une procédure de « Connection Request ».

L'invention offre donc une solution simple qui permet de pallier les insuffisances du protocole UPnP IGD qui, comme mentionné précédemment, n'est applicable qu'au sein d'un réseau local, qui plus est de petite taille en raison des messages de découverte envoyés par les différents équipements du réseau au sein même de ce réseau pour découvrir la passerelle UPnP IGD dont ils dépendent. L'application de ce protocole à un réseau de grande taille engendrerait un flux important de messages en provenance de tous les équipements, ce qui n'est pas envisageable en pratique. En outre, conformément au protocole UPnP IGD, la diffusion des messages de découverte reste interne au réseau domestique. Ces messages n'ont pas vocation à traverser les routeurs de ce réseau et ne peuvent pas être acheminés à l'extérieur du réseau domestique. Au contraire, l'invention permet de gérer des situations où le dispositif à gérer et son dispositif de gestion se situent dans des réseaux différents, sans limitation sur la nature et la taille de ces réseaux.

En outre, les implémentations actuelles du protocole UPnP IGD présentent un niveau de sécurité relativement faible, en raison de son utilisation restreinte à la gestion de dispositifs se trouvant au sein d'un réseau domestique. L'invention, en recourant à un échange entre le dispositif à gérer et un serveur apte à contrôler le dispositif intermédiaire s'interfaçant entre les deux réseaux, permet de mettre en œuvre facilement des règles de sécurité plus élevées (ayant recours par exemple à des procédures d'authentification et/ou de chiffrement, etc.).

Dans un mode préféré de réalisation, la mise en œuvre de l'invention s'appuie sur le protocole PCP (Port Control Protocol) défini par l'Internet Engineering Task Force (IETF) dans le document RFC 6887: le serveur apte à contrôler le dispositif intermédiaire est un serveur PCP, et le dispositif à gérer et le serveur communiquent en utilisant le protocole PCP. Autrement dit, la requête d'établissement et la réponse reçue du serveur sont dans ce mode de réalisation, conformes au protocole PCP.

De façon connue en soi, le protocole PCP est un protocole couramment utilisé qui permet de contrôler aisément une entité NAT ou un système de protection de réseau, par exemple pour établir un routage statique vers une machine cliente via l'ouverture d'un port d'entrée sur l'entité NAT ou sur le système de protection de réseau pour cette machine cliente. L'utilisation de ce protocole facilite donc la mise en œuvre de l'invention puisqu'elle ne requiert aucun protocole ni infrastructure spécifique, et est transparente pour le dispositif de gestion.

Le mécanisme proposé par l'invention est donc parfaitement compatible avec les protocoles CWMP et PCP existants.

L'identification du serveur apte à contrôler le dispositif intermédiaire peut être réalisée de différentes façons.

Ainsi, dans un mode particulier de réalisation, le procédé selon l'invention comprend une étape préalable de configuration statique ou dynamique du dispositif à gérer avec une adresse du serveur apte à contrôler le dispositif intermédiaire.

Cette configuration peut être mise en œuvre par un utilisateur du dispositif à gérer ou par le dispositif de gestion, par exemple lors du démarrage de celui-ci lorsqu'il communique avec son dispositif de gestion. Ainsi, notamment, l'étape préalable de configuration du dispositif à gérer peut comprendre la réception en provenance du dispositif de gestion d'un modèle de données comprenant l'adresse du serveur.

Dans un autre mode de réalisation, l'étape d'identification du serveur comprend l'interrogation par le dispositif à gérer d'un serveur DHCP (Dynamic Host Configuration Protocol) et la réception en provenance du serveur DHCP d'une adresse du serveur.

Ce mode de réalisation, combiné à l'utilisation du protocole PCP, tire profit des options déjà existantes du protocole DHCP qui permettent d'accéder à une adresse du serveur PCP contrôlant le dispositif intermédiaire.

Comme mentionné précédemment, l'invention s'applique avantageusement dans un contexte où le dispositif intermédiaire du second réseau de télécommunications est un NAT opérateur ou un système de protection du réseau tel qu'un pare-feu.

Dans un mode particulier de réalisation dans lequel le dispositif intermédiaire est un dispositif de traduction d'adresses situé dans le second réseau de télécommunications, l'établissement d'un routage permanent comprend la création par le dispositif intermédiaire d'une association d'adresses, cette association d'adresses associant à une adresse privée du dispositif à gérer (adresse interne au sens du document RFC 6887) une adresse publique joignable par le dispositif de gestion du dispositif à gérer constituant l'adresse de joignabilité du dispositif à gérer (adresse externe au sens du document RFC 6887).

Autrement dit, l'établissement du routage statique consiste à ouvrir une porte pour les messages entrants destinés au dispositif à gérer.

Dans un mode particulier de réalisation, les différentes étapes du procédé de fourniture sont déterminées par des instructions de programmes d'ordinateurs.

En conséquence, l'invention vise aussi un programme d'ordinateur sur un support d'informations, ce programme étant susceptible d'être mis en œuvre dans un dispositif à gérer ou plus généralement dans un ordinateur, ce programme comportant des instructions adaptées à la mise en œuvre des étapes d'un procédé de fourniture tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations ou d'enregistrement lisible par un ordinateur, et comportant des instructions d'un programme d'ordinateur tel que mentionné ci-dessus.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

L'invention vise également un système de communications comprenant :
- un dispositif à gérer d'un premier réseau de télécommunications tel que décrit précédemment ;
- un dispositif de gestion du dispositif à gérer situé dans un deuxième réseau de télécommunications ;
- un dispositif intermédiaire situé en interface entre les premier et deuxième réseaux de télécommunications ; et
- un serveur apte à contrôle le dispositif intermédiaire.

Le système bénéficie des mêmes avantages que le procédé de fourniture et le dispositif à gérer, cités précédemment.

On peut également envisager, dans d'autres modes de réalisation, que le procédé de fourniture, le dispositif à gérer et le système de communications selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1, déjà décrite, illustre le mécanisme de « Connection Request » proposé par le protocole CWMP pour permettre la gestion d'un équipement par son dispositif de gestion ;
- la figure 2 représente, dans son environnement, un système de communications conforme à l'invention, dans un mode particulier de réalisation ;

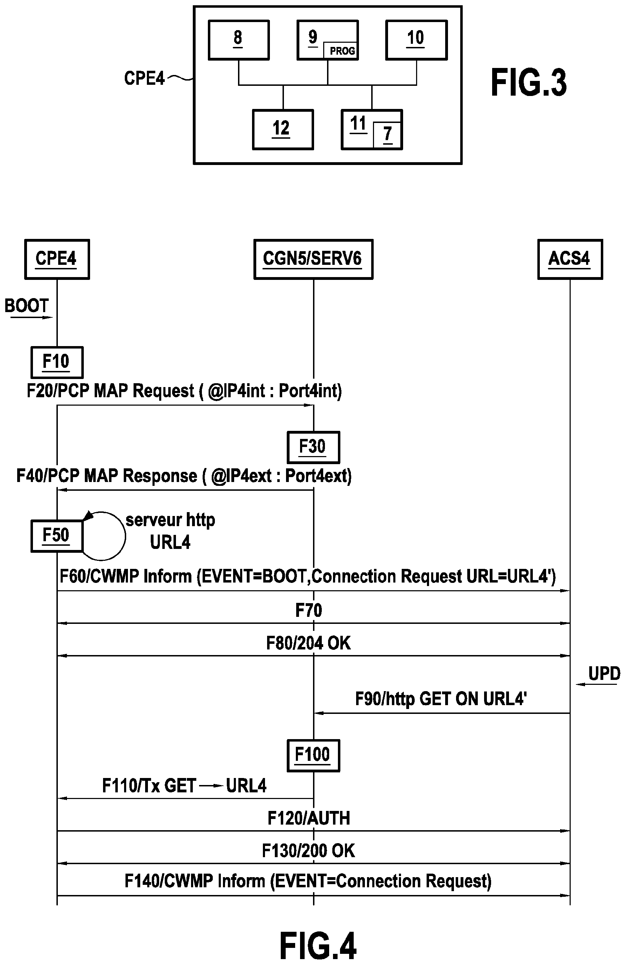

- la figure 3 représente de façon schématique l'architecture matérielle d'un dispositif à gérer du système de communications de la figure 1 ;
- la figure 4 illustre les principales étapes d'un procédé de fourniture selon l'invention, tel qu'il est mis en œuvre par le dispositif à gérer de la figure 3.

### Description détaillée de l'invention

La **figure 2** représente, dans son environnement, un système de communication 1 conforme à l'invention, dans un mode particulier de réalisation appliqué à un routeur domestique en tant que dispositif à gérer.

Dans l'exemple illustré à la figure 2, le système de communication 1 comprend plusieurs équipements ou dispositifs (CPE), connectés entre eux via un réseau de communication local ou réseau de communication d'entreprise tel qu'un réseau WLAN (Wireless Local Area Network). Les équipements du réseau local comprennent par exemple un terminal de voix sur IP CPE1, un terminal de visiophonie CPE2, un boîtier décodeur numérique (Set Top Box) CPE3. Ils sont rattachés à un routeur domestique CPE4 du système de communications 1, connecté à un réseau de télécommunications R1 (aussi appelé passerelle d'accès au réseau R1 ou passerelle résidentielle) et conforme à l'invention.. Le réseau R1 est par exemple un autre réseau LAN ou un réseau WAN (Wide Area Network).

Toutefois, aucune limitation n'est attachée à la nature ou au nombre d'équipements compris dans le réseau local ni à la nature des réseaux. Il peut s'agir par exemple alternativement de réseaux filaires ou de WLAN.

Dans le mode de réalisation illustré à la figure 2, chacun des équipements CPE1, CPE2, CPE3 et CPE4 est administré par un dispositif de gestion ou serveur ACS, par l'intermédiaire du protocole CWMP ou TR-069. En particulier, l'équipement CPE4 est géré par un dispositif de gestion ou serveur ACS ACS4. La gestion de chaque équipement par un serveur ACS comprend notamment la mise à jour des logiciels (ex. firmware) de l'équipement, le suivi de son état et de ses performances, etc. On suppose ici que tous les serveurs ACS sont administrés par un même opérateur (ou fournisseur de services) PROV, et appartiennent à un réseau R2 de l'opérateur PROV distinct ici du réseau local et du réseau R1. Le réseau R2 est par exemple un réseau WAN.

Dans un autre mode de réalisation, tous les équipements sont gérés par un seul et unique serveur ACS, ou plusieurs équipements sont gérés par un même serveur ACS, etc.

Le routeur domestique CPE4 réalise l'interface entre le réseau local et le réseau de télécommunications R1. Dans l'exemple envisagé à la figure 2, le système de communications 1 comprend en outre une entité NAT opérateur CGN5 située à l'interface entre le réseau R1 et le réseau R2. Le NAT opérateur CGN5 est un dispositif intermédiaire au sens de l'invention, placé à l'entrée du réseau R2, c'est-à-dire en coupure de flux entre le routeur domestique CPE4 et son dispositif de gestion ACS4. Il met en œuvre un mécanisme de traduction d'adresses (NAT) qui met en correspondance ici des adresses IP et ports internes (privés) et non routables du réseau R1 (c'est-à-dire non joignables par un équipement placé en amont du NAT opérateur CGN5 et notamment dans le réseau R2) avec un ensemble d'adresses IP et ports externes (publics) et routables sur Internet (c'est-à-dire accessibles depuis le réseau R2 ou depuis le réseau public Internet). Dans la suite de la description, on utilise indifféremment les termes « privé(e) » et « interne » pour désigner un port ou une adresse IP interne du réseau R1 et non routable sur Internet ; de même, on utilise indifféremment les termes « public(que) » et « externe » pour désigner un port ou une adresse IP du réseau R2 et routable sur Internet.

Les adresses IP et ports mis en correspondance sont stockés dans une table de correspondance TAB dans une mémoire non volatile de l'entité NAT CGN5. Un tel mécanisme est connu en soi et n'est pas décrit plus en détail ici.

On note que le NAT opérateur CGN5 situé à l'interface du réseau « interne » R1 et du réseau « externe » R2 n'exclut pas l'existence d'une entité NAT située à l'interface du réseau domestique et du réseau R1, par exemple au niveau du routeur domestique CPE4, cette entité NAT mettant en œuvre une traduction d'adresses entre des adresses internes (privées) du réseau local et les adresses internes (privées) du réseau R1. La combinaison de ces deux entités NAT est aussi désignée par NAT444.

Par ailleurs, dans l'exemple envisagé ici, le NAT opérateur CGN5 est situé à l'interface du réseau interne R1 et du réseau externe R2 dans lequel se trouve le dispositif de gestion ACS4 du routeur CPE4. Toutefois, l'invention s'applique également lorsque le NAT opérateur CGN5 se trouve dans un troisième réseau externe distinct du réseau externe R2 et situé entre les réseaux R1 et R2.

En outre, l'invention ne se limite pas au seul cas où le NAT opérateur CGN5 effectue une traduction d'adresses internes (privées) en adresses externes (publiques). La traduction d'adresses mise en œuvre par le NAT opérateur CGN5 peut consister en variante en une traduction d'adresses IPv4 en adresses IPv6 ou inversement. Un tel NAT est aussi connu sous le nom de DS-Lite CGN.

On s'intéresse plus particulièrement ici à la gestion du routeur domestique CPE4 par son dispositif de gestion ACS4. En raison de la mise en œuvre de ce mécanisme de traduction d'adresses par le NAT opérateur CGN5, le routeur domestique CPE4 n'est pas joignable directement par un autre dispositif situé en amont du NAT opérateur CGN5 dans un réseau externe au réseau R1, typiquement dans le réseau R2. A titre d'exemple, le routeur domestique CPE4 qui dispose d'une adresse de contact interne dans le réseau R1 comprenant un port interne (i.e. privé) PORT4int (ex. PORT4int=15200) et une adresse IP interne (i.e. privée) @IP4int (ex. @IP4int=172.200.100.1) dans le réseau R1, n'est pas joignable directement par son dispositif de gestion ACS4 sur cette adresse (pas de joignabilité IP), celui-ci étant placé de l'autre côté du NAT opérateur CGN5 par rapport au routeur CPE4. Dans la présente description, le dispositif de gestion ACS4 est dit placé en amont du NAT opérateur CGN5 contrairement au routeur CPE4 qui se trouve derrière le NAT opérateur CGN5 ou en aval de celui-ci (on se place selon cette convention dans le sens de circulation des messages « entrants » c'est-à-dire destinés au routeur CPE4).

Pour permettre l'administration du routeur domestique CPE4, en l'absence de cette joignabilité IP, le routeur domestique CPE4 est configuré pour mettre en œuvre un procédé de fourniture d'une adresse à son dispositif de gestion ACS4 conforme à l'invention. Ce procédé s'appuie notamment sur un échange entre le routeur domestique CPE4 et un serveur 6 apte à contrôler le NAT opérateur CGN5. Dans le mode de réalisation décrit ici, cet échange est effectué conformément au protocole de contrôle PCP : le routeur domestique CPE4 intègre ainsi à cet effet un client PCP 7 et le serveur 6 est un serveur PCP, inclus ici par souci de simplification dans le NAT opérateur CGN5.

En variante, le serveur 6 peut être hébergé par une entité physique distincte du NAT opérateur CGN5, apte à communiquer avec celui-ci.

Le protocole PCP est connu en soi. Comme mentionné précédemment, PCP est un protocole couramment utilisé et qui permet de contrôler aisément une entité NAT ou un système de protection de réseau, par exemple pour établir un routage statique vers une machine cliente via l'ouverture d'une porte d'entrée (i.e. d'une adresse de joignabilité comprenant une adresse IP et un port d'entrée) pour cette machine cliente sur l'entité NAT ou sur le système de protection de réseau contrôlé(e) par le serveur PCP. Dans le mode de réalisation décrit ici, ce protocole est utilisé par le routeur domestique CPE4 et par le serveur PCP 6 pour établir au niveau du NAT opérateur CGN5 un routage statique vers le routeur domestique CPE4, comme décrit plus en détail ultérieurement. Le protocole PCP est décrit dans le document RFC 6887 intitulé « Port Control Protocol (PCP) », avril 2013, édité par l'IETF, et n'est pas détaillé davantage ici.

Le routeur CPE4, le dispositif de gestion ACS4 du routeur CPE4, l'entité NAT CGN5 et le serveur PCP 6 appartiennent au système de communications 1.

Dans le mode de réalisation décrit ici, le routeur CPE4 a l'architecture matérielle d'un ordinateur. Il comprend notamment, comme illustré à la **figure 3****,** un processeur 8, une mémoire vive 9, une mémoire morte 10, une mémoire non volatile 11, et un module de communication 12. Le module de communication 12 permet au routeur CPE4 de communiquer avec les autres équipements CPE1-CPE3 du réseau local ainsi qu'avec son dispositif de gestion ACS4 et le serveur 6 se trouvant dans le réseau R2. Ce module comprend par exemple à cet effet une carte réseau, un modem WLAN, etc.

La mémoire non volatile 11 du routeur CPE4 comprend le client PCP 7 mentionné précédemment. Par ailleurs, la mémoire morte 10 du routeur CPE4 constitue un support d'enregistrement conforme à l'invention, lisible par le processeur 8 et sur lequel est enregistré un programme d'ordinateur PROG conforme à l'invention, comportant des instructions pour l'exécution des étapes d'un procédé de fourniture d'une adresse selon l'invention.

Ce programme d'ordinateur PROG définit de façon équivalente des modules fonctionnels et logiciels ici, configurés pour mettre en œuvre les étapes du procédé de fourniture d'une adresse selon l'invention. Ces modules fonctionnels s'appuient sur ou commandent les éléments matériels 8-12 du routeur CPE4 cités précédemment ainsi que le client PCP 7. Ils comprennent notamment ici :
- un module d'identification 4A, configuré pour identifier le serveur 6 contrôlant le NAT opérateur CGN5 situé entre les réseaux R1 et R2, c'est-à-dire en coupure de flux entre le routeur CPE4 et son dispositif de gestion ACS4 ;
- un module d'envoi 4B, configuré pour envoyer au serveur 6 une requête d'établissement par le NAT opérateur CGN5, d'un routage statique vers le routeur CPE4, permettant d'acheminer des paquets reçus par le NAT opérateur CGN5 à destination d'une adresse de joignabilité (comprenant ici une adresse IP et un port), associée par le NAT opérateur CGN5 au routeur CPE4, vers une adresse de contact du routeur. Ce module d'envoi s'appuie notamment sur le client PCP 7 et sur le module de communication 12 du routeur CPE4 ;
- un module de réception 4C, apte à recevoir une réponse du serveur 6 comprenant l'adresse de joignabilité allouée par le NAT opérateur CGN5 au routeur CPE4 en réponse à la requête d'établissement du routage statique. Ce module de réception s'appuie également sur le client PCP 7 et sur le module de communication 12 du routeur CPE4 ; et
- un module de fourniture 4D, configuré pour fournir au dispositif de gestion ACS4, via le protocole CWMP ici, une adresse comprenant l'adresse de joignabilité reçue et destinée à être utilisée par le dispositif de gestion ACS4 pour demander un établissement d'une session de gestion avec le routeur dans le cadre d'une procédure de Connection Request.

Les fonctions de ces différents modules sont décrites plus en détail maintenant en référence à la figure 4.

La **figure 4** illustre les principales étapes d'un procédé de fourniture d'une adresse selon l'invention tel qu'il est mis en oeuvre par le routeur CPE4 pour permettre son administration par le dispositif de gestion ACS4 en présence du dispositif intermédiaire CGN5, ce dernier étant placé en coupure de flux entre le routeur CPE4 et le dispositif de gestion ACS4.

Dans le mode de réalisation décrit ici, le procédé de fourniture d'une adresse selon l'invention est précédé par une phase préalable de configuration (étape F10) mise en œuvre ici par exemple suite au démarrage (« BOOT ») du routeur CPE4. Cette phase préalable consiste à configurer le routeur CPE4 avec l'adresse @IP6 du serveur PCP 6. Il peut s'agir d'une configuration réalisée par exemple sous l'action d'un utilisateur via une interface graphique prévue à cet effet sur le routeur CPE4.

En variante, le routeur CPE4 peut être configuré statiquement avec l'adresse @IP6 du serveur PCP 6 avant son installation chez l'utilisateur client.

Dans une autre variante, une configuration dynamique du routeur CPE4 avec l'adresse @IP6 du serveur 6 peut être envisagée. Par exemple, le routeur CPE4 est configuré pour, lors de son démarrage, identifier le serveur PCP 6 de manière dynamique en utilisant le protocole DHCP. Plus particulièrement, dans cette variante, le module d'identification 4A du routeur CPE4 est configuré pour interroger un serveur DHCP du réseau R1 (non représenté sur la figure 2) afin d'obtenir une adresse IP du serveur PCP 6. Il s'appuie par exemple sur les options prévues à cet effet par le protocole DHCP (ex. OPTION_V4_PCP_SERVER pour une adresse IPv4), et décrites notamment dans le document RFC 7291 intitulé « DHCP Options for the Port Control Protocol (PCP) », juillet 2014, édité par l'IETF.

Dans une autre variante encore, la configuration du routeur CPE4 avec l'adresse @IP6 du serveur PCP 6 peut être réalisée au cours d'une session établie entre le routeur domestique CPE4 et son dispositif de gestion ACS4 au démarrage du routeur CPE4 et à l'initiative du routeur CPE4, durant laquelle le dispositif de gestion ACS4 fournit au routeur domestique CPE4 un modèle de données comprenant une adresse de joignabilité (i.e. l'adresse IP @IP6) du serveur PCP 6.

A l'issue de la configuration du routeur CPE4, l'adresse IP @IP6 du serveur 6 est stockée par le routeur domestique CPE4 dans sa mémoire non volatile 11. Cette configuration du routeur CPE4 permet au module d'identification 4A d'identifier le serveur PCP 6 contrôlant le NAT opérateur CGN5 placé en coupure de flux entre son dispositif de gestion ACS4 et lui.

Suite à l'identification du serveur PCP 6 par le module d'identification 4A, le module d'envoi 4B du routeur CPE4, par l'intermédiaire du client PCP 7, envoie au serveur PCP 6 une requête d'établissement par le NAT opérateur CGN5 d'un routage statique vers le routeur CPE4 des messages qui lui sont destinés et qui sont reçus par le NAT opérateur CGN5 (étape F20). Cette requête, destinée à l'adresse @IP6 du serveur PCP 6, est conforme au protocole PCP : il s'agit d'un message PCP MAP Request contenant l'adresse de contact du routeur CPE4, comprenant l'adresse IP privée (interne) @IP4int et le port privé (interne) PORT4int. Le routeur CPE4, par le biais de cette requête, demande au serveur PCP 6 installé sur le NAT opérateur CGN5, l'ouverture d'une connexion entrante statique sur le NAT CGN5.

Sur réception de cette requête, après éventuellement quelques contrôles d'usage préalables (ex. correspondance entre l'adresse du routeur CPE4 et l'adresse source de la requête, etc.), le serveur PCP 6 établit au niveau du NAT opérateur CGN5 le routage statique requis vers le routeur domestique CPE4 (étape F30).

A cet effet, il alloue au routeur CPE4 une adresse IP publique (externe), @IP4ext, et un port public (externe), PORT4ext, dans le réseau R2 (i.e. routable depuis Internet). L'adresse IP publique @IP4ext et le port public PORT4ext constituent une adresse de joignabilité du routeur CPE4 au sens de l'invention. Par exemple, @IP4ext=193.253.100.122 et PORT4ext=50815.

Puis le serveur PCP 6 crée dans la table de correspondance TAB maintenue par le NAT opérateur CGN5 une association d'adresses pour le routeur CPE4, cette association d'adresses associant le couple comprenant l'adresse IP privée @IP4int et le port privé PORT4int (autrement dit l'adresse de contact du routeur CPE4), au couple comprenant l'adresse IP publique @IP4ext et le port public PORT4ext (autrement dit l'adresse de joignabilité du routeur CPE4).

En variante, si le NAT opérateur CGN5 réalise une traduction d'adresses IPv4 en adresses IPv6 ou inversement, l'association stockée dans la table de correspondance NAT associe à l'adresse IPv4 du routeur CPE4 une adresse IPv6 allouée au routeur CPE4 ou inversement.
Puis le serveur PCP 6 répond à la requête du routeur CPE4 en lui transmettant l'adresse IP publique @IP4ext et le port public PORT4ext qui lui ont été alloués dans un message PCP MAP Response (étape F40). Dans le mode de réalisation décrit ici, suite à la réception par le module de réception 4C (et le client PCP 7) du routeur CPE4 de l'adresse de joignabilité publique ou externe qui lui a été allouée, le routeur CPE4 ouvre un serveur http sur une adresse (ou URL pour Uniform Resource Locator) URL4 (étape F50). L'adresse URL4 est une URL comprenant l'adresse de contact du routeur CPE4, c'est-à-dire l'adresse IP privée @IP4int et le port privé PORT4int du routeur CPE4, ainsi qu'un chemin généré de façon aléatoire vers le serveur http (ex. YmTzX21MLY). Le chemin vers le serveur http est mémorisé par le routeur CPE4. L'adresse URL4 est par exemple URL4=http://172.20.100.1:15200/YmTzX21MLY. Le serveur http ainsi ouvert peut être protégé par un identifiant ID et un mot de passe PWD, partagés avec le dispositif de gestion ACS4. Aucune limitation n'est attachée à la façon dont ce partage est effectué (identifiant et mot de passe codés en dur sur les deux dispositifs, échange sécurisé, etc.).

On note que l'étape F50 d'ouverture du serveur http par le routeur CPE4 peut être mise en œuvre avant la réception par le routeur CPE4 de l'adresse de joignabilité publique qui lui a été allouée, par exemple dès son démarrage (« BOOT »). Elle n'est pas nécessairement corrélée à l'étape F50.

Puis le routeur CPE4, par l'intermédiaire de son module d'envoi 4D, envoie un message CWMP Inform à son dispositif de gestion ACS4 (étape F60). Il indique dans ce message son modèle de données dans lequel est inclus l'adresse (« ConnectionRequestURL ») du serveur http sur lequel le dispositif de gestion ACS4 peut le contacter afin d'établir une session de gestion. Toutefois, conformément à l'invention, comme l'adresse URL4 n'est pas joignable par le dispositif de gestion ACS4 en raison de la présence du NAT opérateur CGN5 (l'adresse IP privée @IP4int et le port privé PORT4int n'étant pas joignables directement à partir d'un autre dispositif situé en amont du NAT opérateur CGN5), le module d'envoi 4D remplace dans son message CWMP Inform l'adresse URL4 sur laquelle le serveur http a été ouvert, par une adresse URL4' comprenant l'adresse de joignabilité externe qui lui a été allouée, et le chemin vers le serveur http. Par exemple URL4'=http://193.253.100.122 :50814/YmTzX21MLY. Le routeur CPE4 mémorise le chemin vers le serveur http en association avec l'URL URL4'.

Le message CWMP Inform envoyé par le module d'envoi 4D est ainsi un message CWMP Inform ayant comme paramètre event=BOOT et contenant comme URL destinée à être utilisée par le dispositif de gestion ACS4 pour établir une session de gestion avec le routeur CPE4 l'adresse URL4' (i.e. ConnectionRequestURL=URL4').

Le dispositif de gestion ACS4 mémorise l'URL URL4' dans sa mémoire non volatile pour d'éventuelles futures sessions de gestion du routeur CPE4, et s'ensuit un dialogue entre le routeur CPE4 et le serveur ACS4 (étape F70), qui se clôture par un message 204 OK envoyé par le dispositif de gestion ACS4 au routeur domestique CPE4 (étape F80).

On suppose maintenant qu'une intervention (ex. mise à jour de firmware ou communication) doit être réalisée par l'opérateur PROV sur le routeur domestique CPE4 (« UPD »).

A cet effet, le dispositif de gestion ACS4 a recours, pour établir une session de gestion asynchrone avec le routeur CPE4, à une procédure classique de « connection request » telle qu'elle est prévue par le protocole CWMP, et décrite notamment dans le document TR-069 cité précédemment. Il utilise pour mettre en œuvre cette procédure l'adresse URL4' que lui a fourni précédemment le routeur domestique CPE4 et qui est joignable par le dispositif de gestion ACS4 malgré la présence du NAT opérateur CGN5 entre ces deux équipements.

Plus particulièrement et conformément à la procédure de « connection request », le dispositif de gestion ACS4 émet à destination du routeur CPE4, vers son adresse de joignabilité externe, une requête http GET sur l'URL URL4' fournie par le routeur CPE4 (étape F90). De façon connue dans le protocole http, la méthode GET permet de demander une ressource.

Cette requête http GET est interceptée par le NAT opérateur CGN5 qui se trouve en coupure de flux des échanges entre le dispositif de gestion ACS4 et le routeur CPE4 (étape F100). Le NAT opérateur CGN5 identifie l'association d'adresses stockée pour ce routeur CPE4 dans la table de correspondance TAB. Il obtient à partir de cette association l'adresse de contact interne @IP4int et PORT4int du routeur CPE4, et remplace dans l'entête IP de la requête http GET, l'adresse de joignabilité externe (@IP4ext, PORT4ext) par l'adresse interne (@IP4int, PORT4int). La requête GET est ensuite transmise par le NAT opérateur CGN5 au routeur CPE4 une fois la translation d'adresses effectuée (étape F110).

Sur réception de la requête GET par le routeur CPE4, dans ce mode de réalisation, une authentification du dispositif de gestion ACS4 par le routeur CPE4 est mise en œuvre au cours de laquelle le dispositif de gestion ACS4 fournit l'identifiant et le mot de passe préalablement partagés entre le routeur CPE4 et le dispositif de gestion ACS4 (étape F120). Un message 200 OK est émis par le routeur CPE4 à destination du dispositif de gestion ACS4 en cas de succès de l'authentification (F130).

Suite à cet échange et à l'authentification positive du dispositif de gestion ACS4, le routeur CPE4 interprète la requête GET reçue (et contenant le chemin vers le serveur http ouvert par le routeur CPE4) comme étant une demande d'établissement d'une session de gestion du dispositif de gestion ACS4 et répond en tentant d'initier une session avec ce dernier, en envoyant un message CWMP Inform contenant un événement "6 CONNECTION REQUEST" (F140). Dès lors, le dispositif de gestion ACS4 peut démarrer une session d'administration à distance du routeur CPE4 à sa guise via la session ainsi établie et lui demander différentes actions par le biais de commandes RPC (Remote Procédure Call) en vue de sa mise à jour. Par exemple, il peut lui demander de modifier la configuration d'un ou de plusieurs paramètres, de retourner la valeur d'un de ses paramètres, etc.

Dans le mode de réalisation envisagé ici, l'invention a été décrite en référence au protocole CWMP. Toutefois elle s'applique également à d'autres protocoles de gestion d'équipements à distance fonctionnant de façon similaire à CWMP (sessions à l'initiative des équipements, publication d'une adresse de connexion pour déclencher une connexion de l'équipement à son serveur d'administration, etc.) et notamment à des protocoles propriétaires. Elle trouve une application privilégiée dans les protocoles s'appuyant sur le protocole http tels que le protocole CWMP.

En outre, l'invention a été décrite en prenant comme exemple de dispositif à gérer le routeur CPE4 situé à l'interface du réseau local et du réseau R1. Cette hypothèse n'est pas limitative en soi et l'invention peut s'appliquer à tout type de dispositif à gérer placé directement, comme le routeur CPE4, derrière un dispositif intermédiaire tel que le NAT opérateur CGN5.

Par ailleurs, dans l'exemple illustré à la figure 2, on a considéré un NAT opérateur CNG comme dispositif intermédiaire entre le routeur CPE4 et son dispositif de gestion ACS4, s'opposant à une joignabilité IP directe du routeur CPE4 par le dispositif de gestion ACS4. Toutefois, l'invention s'applique également dans d'autres contextes. Par exemple, le dispositif intermédiaire en coupure de flux entre le routeur CPE4 et son dispositif de gestion ACS4 peut être un dispositif de protection de réseau, tel un pare-feu (ou « firewall » en anglais), se trouvant à l'interface du réseau R1 et du réseau R2 de l'opérateur. Les étapes du procédé de fourniture sont alors identiques ou similaires à celles décrites précédemment en référence aux figures 2-4 (on se place dans un contexte dans lequel, lors de l'étape F30, le dispositif de protection de réseau par l'intermédiaire de son serveur PCP ouvre une connexion statique pour le routeur CPE4 (établissement d'un routage statique), autrement dit, autorise tous les flux entrants destinés au routeur CPE4 en lui allouant une adresse et un port d'entrée externes autorisés).

## Revendications

1. Procédé de fourniture par un dispositif à gérer (CPE4) d'un premier réseau de télécommunications (R1), à un dispositif de gestion (ACS4) dudit dispositif à gérer, situé dans un deuxième réseau de télécommunications (R2), d'une adresse (URL4') permettant audit dispositif de gestion de demander un établissement d'une session de gestion au dispositif à gérer, au moins un dispositif intermédiaire (CGN5) étant situé entre les premier et deuxième réseaux de télécommunications, ce procédé de fourniture comprenant des étapes mises en oeuvre par le dispositif à gérer, dont :
- une étape d'identification (F10) d'un serveur (6) apte à contrôler le dispositif intermédiaire ;
- une étape d'envoi (F20) au serveur d'une requête d'établissement par le dispositif intermédiaire d'un routage statique vers le dispositif à gérer, permettant d'acheminer les paquets reçus par le dispositif intermédiaire à destination d'une adresse de joignabilité associée par le dispositif intermédiaire au dispositif à gérer vers une adresse de contact dudit dispositif à gérer ;
- une étape de réception (F40) d'une réponse du serveur comprenant ladite adresse de joignabilité associée par le dispositif intermédiaire au dispositif à gérer ; et
- une étape de fourniture (F60) au dispositif de gestion d'une adresse (URL4') comprenant l'adresse de joignabilité reçue, ladite adresse étant destinée à être utilisée par le dispositif de gestion pour demander un établissement d'une session de gestion au dispositif à gérer.

2. Procédé de fourniture selon la revendication 1 dans lequel la requête d'établissement et la réponse reçue du serveur sont conformes au protocole PCP, et le serveur apte à contrôler le dispositif intermédiaire est un serveur PCP.

3. Procédé de fourniture selon la revendication 1 ou 2 comprenant une étape préalable de configuration (F10) du dispositif à gérer avec une adresse du serveur apte à contrôler le dispositif intermédiaire.

4. Procédé de fourniture selon la revendication 3 dans lequel l'étape préalable de configuration (F10) du dispositif à gérer comprend la réception en provenance du dispositif de gestion d'un modèle de données comprenant l'adresse du serveur.

5. Procédé de fourniture selon la revendication 1 ou 2 dans lequel l'étape d'identification (F10) du serveur comprend l'interrogation par le dispositif à gérer d'un serveur DHCP et la réception en provenance du serveur DHCP d'une adresse du serveur.

6. Procédé de fourniture selon l'une quelconque des revendications 1 à 5 dans lequel le dispositif intermédiaire est un dispositif de traduction d'adresses (CGN5), l'établissement d'un routage statique comprend la création par le dispositif intermédiaire d'une association d'adresses, cette association d'adresses associant à une adresse interne du dispositif à gérer une adresse externe joignable par le dispositif de gestion du dispositif à gérer constituant ladite adresse de joignabilité.

7. Procédé de fourniture selon l'une quelconque des revendications 1 à 6 dans lequel le dispositif intermédiaire est un dispositif de protection de réseau.

8. Programme d'ordinateur comportant des instructions pour l'exécution des étapes du procédé de fourniture selon l'une quelconque des revendications 1 à 7 lorsque ledit programme est exécuté par un ordinateur.

9. Support d'enregistrement lisible par un ordinateur sur lequel est enregistré un programme d'ordinateur selon la revendication 8.

10. Dispositif à gérer (CPE4) d'un premier réseau de télécommunications (R1), géré par un dispositif de gestion (ACS4) situé dans un deuxième réseau de télécommunications (R2), le dispositif à gérer (CPE4) comprenant :
- un module d'identification (4A), configuré pour identifier un serveur (6) apte à contrôler un dispositif intermédiaire (CGN5) situé entre les premier et deuxième réseaux de télécommunications ;
- un module d'envoi (4B), configuré pour envoyer au serveur une requête d'établissement par le dispositif intermédiaire d'un routage statique vers le dispositif à gérer permettant d'acheminer les paquets reçus par le dispositif intermédiaire à destination d'une adresse de joignabilité associée par le dispositif intermédiaire au dispositif à gérer vers une adresse de contact dudit dispositif à gérer ;
- un module de réception (4C), apte à recevoir une réponse du serveur comprenant ladite adresse de joignabilité associée par le dispositif intermédiaire au dispositif à gérer ; et
- un module de fourniture (4D) configuré pour fournir au dispositif de gestion une adresse (URL4') comprenant l'adresse de joignabilité reçue, ladite adresse étant destinée à être utilisée par le dispositif de gestion pour demander un établissement d'une session de gestion au dispositif à gérer.

11. Système de communications (1) comprenant :
- un dispositif à gérer (CPE4) d'un premier réseau de télécommunications (R1) selon la revendication 10 ;
- un dispositif de gestion (ACS4) du dispositif à gérer situé dans un deuxième réseau de télécommunications (R2) ;
- un dispositif intermédiaire (CGN5) situé entre les premier et deuxième réseaux de télécommunications ; et
- un serveur (6) apte à contrôler le dispositif intermédiaire.

## Patentansprüche

1. Verfahren zur Bereitstellung, von einer zu verwaltenden Vorrichtung (CPE4) eines ersten Telekommunikationsnetzes (R1) für eine Verwaltungsvorrichtung (ACS4) der zu verwaltenden Vorrichtung, die sich in einem zweiten Telekommunikationsnetz (R2) befindet, einer Adresse (URLA'), die es der Verwaltungsvorrichtung erlaubt, einen Aufbau einer Verwaltungssitzung von der zu verwaltenden Vorrichtung anzufordern, wobei mindestens eine Zwischenvorrichtung (CGN5) sich zwischen dem ersten und dem zweiten Telekommunikationsnetz befindet, wobei dieses Bereitstellungsverfahren Schritte enthält, die von der zu verwaltenden Vorrichtung durchgeführt werden, darunter:
- einen Schritt der Identifizierung (F10) eines Servers (6), der fähig ist, die Zwischenvorrichtung zu steuern;
- einen Schritt des Sendens (F20) an den Server einer Anforderung eines Aufbaus durch die Zwischenvorrichtung eines statischen Routings zur zu verwaltenden Vorrichtung, das es ermöglicht, die von der Zwischenvorrichtung empfangenen, für eine von der Zwischenvorrichtung der zu verwaltenden Vorrichtung zugeordnete Erreichbarkeitsadresse bestimmten Pakete zu einer Kontaktadresse der zu verwaltenden Vorrichtung zu befördern;
- einen Schritt des Empfangs (F40) einer die von der Zwischenvorrichtung der zu verwaltenden Vorrichtung zugeordnete Erreichbarkeitsadresse enthaltenden Antwort des Servers; und
- einen Schritt der Bereitstellung (F60) für die Verwaltungsvorrichtung einer die empfangene Erreichbarkeitsadresse enthaltenden Adresse (URL4'), wobei die Adresse dazu bestimmt ist, von der Verwaltungsvorrichtung verwendet zu werden, um einen Aufbau einer Verwaltungssitzung von der zu verwaltenden Vorrichtung anzufordern.

2. Bereitstellungsverfahren nach Anspruch 1, wobei die Aufbauanforderung und die vom Server empfangene Antwort dem PCP-Protokoll entsprechen, und der Server, der fähig ist, die Zwischenvorrichtung zu steuern, ein PCP-Server ist.

3. Bereitstellungsverfahren nach Anspruch 1 oder 2, das einen vorhergehenden Schritt der Konfiguration (F10) der zu verwaltenden Vorrichtung mit einer Adresse des Servers enthält, der fähig ist, die Zwischenvorrichtung zu steuern.

4. Bereitstellungsverfahren nach Anspruch 3, wobei der vorhergehenden Schritt der Konfiguration (F10) der zu verwaltenden Vorrichtung den Empfang von der Verwaltungsvorrichtung kommend eines die Adresse des Servers enthaltenden Datenmodells enthält.

5. Bereitstellungsverfahren nach Anspruch 1 oder 2, wobei der Schritt der Identifizierung (F10) des Servers die Abfrage durch die zu verwaltende Vorrichtung eines DHCP-Servers und den Empfang vom DHCP-Server kommend einer Adresse des Servers enthält.

6. Bereitstellungsverfahren nach einem der Ansprüche 1 bis 5, wobei die Zwischenvorrichtung eine Adressenübersetzungsvorrichtung (CGN5) ist, wobei der Aufbau eines statischen Routings die Erzeugung durch die Zwischenvorrichtung einer Adressenzuordnung enthält, wobei diese Adressenzuordnung einer internen Adresse der zu verwaltenden Vorrichtung eine von der Verwaltungsvorrichtung der zu verwaltenden Vorrichtung erreichbare externe Adresse zuordnet, die die Erreichbarkeitsadresse bildet.

7. Bereitstellungsverfahren nach einem der Ansprüche 1 bis 6, wobei die Zwischenvorrichtung eine Netzschutzvorrichtung ist.

8. Computerprogramm, das Anweisungen zur Ausführung der Schritte des Bereitstellungsverfahrens nach einem der Ansprüche 1 bis 7 aufweist, wenn das Programm von einem Computer ausgeführt wird.

9. Computerlesbarer Aufzeichnungsträger, auf dem ein Computerprogramm nach Anspruch 8 aufgezeichnet ist.

10. Zu verwaltende Vorrichtung (CPE4) eines ersten Telekommunikationsnetzes (R1), die von einer Verwaltungsvorrichtung (ACS4) verwaltet wird, die sich in einem zweiten Telekommunikationsnetz (R2) befindet, wobei die zu verwaltende Vorrichtung (CPE4) enthält:
- ein Identifikationsmodul (4A), das konfiguriert ist, einen Server (6) zu identifizieren, der fähig ist, eine Zwischenvorrichtung (CGN5) zu steuern, die sich zwischen dem ersten und dem zweiten Telekommunikationsnetz befindet;
- ein Sendemodul (4B), das konfiguriert ist, an den Server eine Anforderung eines Aufbaus durch die Zwischenvorrichtung eines statischen Routings zur zu verwaltenden Vorrichtung zu senden, das es ermöglicht, die von der Zwischenvorrichtung empfangenen, für eine von der Zwischenvorrichtung der zu verwaltenden Vorrichtung zugeordnete Erreichbarkeitsadresse bestimmten Pakete zu einer Kontaktadresse der zu verwaltenden Vorrichtung zu befördern;
- ein Empfangsmodul (4C), das fähig ist, eine Antwort vom Server zu empfangen, die die von der Zwischenvorrichtung der zu verwaltenden Vorrichtung zugeordnete Erreichbarkeitsadresse enthält; und
- ein Bereitstellungsmodul (4D), das konfiguriert ist, der Verwaltungsvorrichtung eine die empfangene Erreichbarkeitsadresse enthaltende Adresse (URL4') bereitzustellen, wobei die Adresse dazu bestimmt ist, von der Verwaltungsvorrichtung verwendet zu werden, um von der zu verwaltenden Vorrichtung einen Aufbau einer Verwaltungssitzung anzufordern.

11. Kommunikationssystem (1), das enthält:
- eine zu verwaltende Vorrichtung (CPE4) eines ersten Telekommunikationsnetzes (R1) nach Anspruch 10;
- eine Verwaltungsvorrichtung (ACS4) der zu verwaltenden Vorrichtung, die sich in einem zweiten Telekommunikationsnetz (R2) befindet;
- eine Zwischenvorrichtung (CGN5), die sich zwischen dem ersten und dem zweiten Telekommunikationsnetz befindet; und
- einen Server (6), der fähig ist, die Zwischenvorrichtung zu steuern.

## Claims

1. Method for the provision, by a device (CPE4) to be managed of a first telecommunications network (R1), to a management device (ACS4) for managing said device to be managed, which management device is located in a second telecommunications network (R2), of an address (URL4') allowing said management device to make a request of the device to be managed for the establishment of a management session, at least one intermediate device (CGN5) being located between the first and second telecommunications networks, this provision method comprising steps implemented by the device to be managed, including:
- a step (F10) of identifying a server (6) able to control the intermediate device;
- a step (F20) of sending the server a request for the establishment, by the intermediate device, of static routing to the device to be managed, allowing the packets received by the intermediate device and bound for a reachability address associated by the intermediate device with the device to be managed to be routed to a contact address of said device to be managed;
- a step (F40) of receiving a response from the server comprising said reachability address associated by the intermediate device with the device to be managed; and
- a step (F60) of providing the management device with an address (URL4') comprising the received reachability address, said address being intended to be used by the management device to make a request of the device to be managed for the establishment of a management session.

2. Provision method according to Claim 1, wherein the establishment request and the response received from the server are in accordance with the PCP protocol, and the server able to control the intermediate device is a PCP server.

3. Provision method according to Claim 1 or 2, comprising a preliminary step (F10) of configuring the device to be managed with an address of the server able to control the intermediate device.

4. Provision method according to Claim 3, wherein the preliminary step (F10) of configuring the device to be managed comprises the reception, from the management device, of a data model comprising the address of the server.

5. Provision method according to Claim 1 or 2, wherein the step (F10) of identifying the server comprises the interrogation, by the device to be managed, of a DHCP server, and the reception, from the DHCP server, of an address of the server.

6. Provision method according to any one of Claims 1 to 5, wherein the intermediate device is an address translation device (CGN5), the establishment of static routing comprises the creation, by the intermediate device, of an address association, this address association associating an external address reachable by the management device for managing the device to be managed, which constitutes said reachability address, with an internal address of the device to be managed.

7. Provision method according to any one of Claims 1 to 6, wherein the intermediate device is a network protection device.

8. Computer program including instructions for carrying out the steps of the provision method according to any one of Claims 1 to 7 when said program is executed by a computer.

9. Computer-readable recording medium on which a computer program according to Claim 8 is recorded.

10. Device (CPE4) to be managed of a first telecommunications network (Rl), which is managed by a management device (ACS4) located in a second telecommunications network (R2), the device (CPE4) to be managed comprising:
- an identification module (4A), which is configured to identify a server (6) able to control an intermediate device (CGN5) located between the first and second telecommunications networks;
- a sending module (4B), which is configured to send the server a request for the establishment, by the intermediate device, of static routing to the device to be managed, allowing the packets received by the intermediate device and bound for a reachability address associated by the intermediate device with the device to be managed to be routed to a contact address of said device to be managed;
- a reception module (4C), which is able to receive a response from the server comprising said reachability address associated by the intermediate device with the device to be managed; and
- a provision module (4D), which is configured to provide the management device with an address (URL4') comprising the received reachability address, said address being intended to be used by the management device to make a request of the device to be managed for the establishment of a management session.

11. Communications system (1) comprising:
- a device (CPE4) to be managed of a first telecommunications network (R1) according to Claim 10;
- a management device (ACS4) for managing the device to be managed, which management device is located in a second telecommunications network (R2);
- an intermediate device (CGN5) located between the first and second telecommunications networks; and
- a server (6) able to control the intermediate device.
